# FASCICULE DE BREVET EUROPEEN

(11) **EP 4 605 854 B1**
(45) Date de publication et mention de la délivrance du brevet: **30.09.2026**
(21) Numéro de dépôt: 23732465.2
(22) Date de dépôt: 09.06.2023
(51) Int. Cl.: G06K 19/02, G06K 19/077

(54) **ÉQUIPEMENT DE FABRICATION D'UNE BANDE D'ÉTIQUETTES ÉLECTRONIQUES**
VORRICHTUNG ZUR HERSTELLUNG EINES STREIFENS VON ELEKTRONISCHEN ETIKETTEN
DEVICE FOR MANUFACTURING A STRIP OF ELECTRONIC TAGS

(30) Priorité: 18.10.2022 FR 2210758
(43) Date de publication de la demande: 27.08.2025
(73) Titulaire: PRIMO1D, 38000 Grenoble (FR)
(72) Inventeur: CARTEAUX, Nicolas, 38000 Grenoble (FR)
(74) Mandataire: IP Trust
(86) Numéro de dépôt international: PCT/EP2023/065467
(87) Numéro de publication internationale: WO 2024/083363

(56) Documents cités:
- WO-A1-02/093524
- FR-A1- 3 036 823
- FR-A1- 3 103 043

## Description

### DOMAINE DE L'INVENTION

La présente invention concerne le domaine de l'étiquetage électronique d'identification de pièces textiles, telles que des vêtements ou, plus généralement, de pièces de toute nature. Plus particulièrement, la présente invention concerne un équipement de fabrication d'une étiquette électronique d'identification.

### ARRIERE PLAN TECHNOLOGIQUE DE L'INVENTION

On désigne souvent les étiquettes employées dans le domaine de l'identification par la dénomination « étiquette RFID » (des initiales de l'expression anglo-saxonne « Radio-Frequency IDentification », c'est-à-dire « identification par radiofréquence »). De telles étiquettes comprennent une puce électronique d'identification présentant des fonctions d'émission-réception radiofréquence couplée à une antenne.

Le document WO2021089939 divulgue une étiquette RFID de forme rectangulaire dont la longueur est typiquement comprise entre 3 cm et 20 cm, et la largeur typiquement comprise entre 0,5 mm et 2 cm. Cette étiquette est constituée de deux portions de ruban textile assemblées et scellées l'une à l'autre par leurs faces principales. Entre ces deux faces, pris en sandwich, réside un segment d'un fil RFID, c'est-à-dire un segment de fil portant une puce électronique d'identification couplée à une d'antenne. L'étiquette présente une flexibilité suffisante pour ne pas modifier la flexibilité de la pièce textile dans lequel elle est destinée à s'intégrer. Le facteur de forme de cette étiquette et sa flexibilité permettent notamment son intégration dans une couture, par exemple en la disposant au moins en partie entre les boucles de surjet de la pièce textile.

Pour fabriquer une telle étiquette, le document précité propose de fournir, sous la forme d'une bobine, un fil RFID de grande longueur portant une pluralité de dispositifs électroniques d'identification régulièrement espacés. Le fil RFID qui se dévide de la bobine est guidé au niveau d'un poste de découpe pour y prélever successivement des segments, chaque segment comportant un dispositif électronique d'identification. Les segments prélevés sont insérés, un à un, entre deux rubans défilant continument, ces rubans se dévidant de leurs bobines respectives. Cette insertion est réalisée par l'intermédiaire d'un conduit de guidage permettant de transporter un segment prélevé au niveau du poste de découpe dans une zone d'insertion d'un poste de scellement. Dans cette zone d'insertion, le segment transporté par le conduit est happé par le défilement des deux rubans. Lorsque le segment prélevé est bien pris en sandwich entre les deux rubans, les deux rubans sont scellés l'un à l'autre.

Cet équipement de fabrication permet de disposer les segments de fils RFID en les espaçant d'une distance choisie entre les deux rubans. La bande d'étiquettes électroniques peut ensuite être découpée en étiquettes au niveau d'un poste de prélèvement ou prédécoupée au niveau d'un poste de prédécoupe. Dans ce dernier cas, la bande peut être recueillie sur une bobine en vue de son stockage et de son utilisation future.

Des améliorations supplémentaires sont nécessaires pour la mise en œuvre de cet équipement à haute cadence et de manière fiable.

### OBJET DE L'INVENTION

Un but de l'invention est de proposer de telles améliorations.

### BREVE DESCRIPTION DE L'INVENTION

En vue de la réalisation de ce but, l'objet de l'invention propose un équipement de fabrication d'une bande d'étiquettes électroniques selon la revendication 1.

Selon d'autres caractéristiques avantageuses et non limitatives de l'invention, prises seules ou selon toute combinaison techniquement réalisable :
- le poste de scellement comprend une enclume présentant une surface principale et une sonotrode présentant une surface active disposée en vis-à-vis de la surface principale de l'enclume au niveau de la zone de scellement à travers laquelle les deux rubans peuvent défiler et être soudés l'un à l'autre ;
- le dispositif de guidage comprend un moyen de pression couplé au pied presseur, pour maitriser la pression appliquée sur l'assemblage formé au moins du ruban supérieur et du ruban inférieur ;
- l'enclume est formée d'un tambour rotatif présentant un axe de rotation perpendiculaire à la direction de défilement et une face périphérique portant deux rangées latérales de dents de marquage définissant une gorge centrale, les dents de marquages formant la surface principale de l'enclume ;
- le tambour rotatif présente deux flancs circulaires, les rangées de dents de marquage étant disposées en retrait des flancs circulaires, vers l'intérieur de la face périphérique, de manière à libérer deux espacements latéraux ;
- le pied presseur comprend deux bras longitudinaux ;
- le pied presseur comprend, entre les bras longitudinaux, une surface d'appui portant une rainure ;
- le pieds presseur est monté en cavalier sur le tambour pour disposer les bras longitudinaux parallèlement aux flancs circulaires du tambour, au niveau des deux espacements latéraux ;
- le dispositif de guidage comprend un corps présentant deux tunnels formant respectivement le couloir supérieur et le couloir inférieur, les deux tunnels et le conduit central débouchant dans un logement interne dans lequel le pied presseur réside ;
- le poste de scellement est précédé d'un poste de découpe d'un fil de grande dimension pour en prélever les segments ;
- l'équipement de fabrication comprend un poste de cautérisation (pour recevoir la bande d'étiquette et former un pavé de soudure dans une portion centrale d'une zone morte de la bande, dépourvue de segment de fil ;
- l'équipement de fabrication comprend un poste de prédécoupe pour former deux entailles transversales dans la zone morte de la bande pour couper au moins les parties latérales du ruban disposée hors de la portion centrale occupée par le pavé de soudure ;
- l'équipement de fabrication comprend au moins un poste de repérage pour localiser un élément remarquable sur l'un des rubans, sur le segment de fils et/ ou sur la bande d'étiquette au cours de leurs défilements
- l'équipement de fabrication comprend au moins un poste de repliement, disposé en amont du poste de scellement, le poste de repliement recevant un ruban de relativement grande largeur qu'il replie sur-lui même longitudinalement pour former les rubans supérieur et inférieur.

### BREVE DESCRIPTION DES FIGURES

D'autres caractéristiques et avantages de l'invention ressortiront de la description détaillée de l'invention qui va suivre en référence aux figures annexées sur lesquels :
La [Fig.1] représente un équipement de fabrication d'une bande d'étiquettes électroniques conforme à l'invention ;
Les figures 2a,2b représentent schématiquement les opérations de découpe d'un fil RFID et d'assemblage réalisé par les postes de découpe et de scellement d'un équipement conforme à l'invention ;
La [Fig.3a] représente selon deux angles de vue différente certains éléments d'un poste de scellement conforme à l'invention ;
La [Fig.3b] représente plus en détail une enclume et une sonotrode d'un poste de scellement conforme à l'invention ;
La [Fig.4] illustre les principes mis en œuvre par un dispositif de guidage conforme à l'invention ;
La [Fig.5a] représente différente vue d'une pièce d'un dispositif de guidage d'un poste de scellement d'un équipement conforme à l'invention ;
La [Fig.5b] représente différente vue d'une autre pièce d'un dispositif de guidage d'un poste de scellement d'un équipement conforme à l'invention ;
La [Fig.6] représente un mode de réalisation d'un dispositif de guidage d'un poste de scellement d'un équipement conforme à l'invention ;
La [Fig.7] représente une bande d'étiquette produite par un équipement conforme à l'invention ;
La [Fig.8] représente une vue en perspective d'un pied presseur conforme à l'invention ;
La [Fig.9] représente une coque définissant en partie un dispositif de guidage selon un mode de mis en œuvre.

### DESCRIPTION DETAILLEE DE L'INVENTION

On rappelle en introduction qu'une bande d'étiquettes fabriquée par un équipement conforme à l'invention est obtenue en insérant un segment d'un fil RFID, comportant un dispositif électronique d'identification, entre deux rubans défilant continument, ces rubans étant désignés par les expressions « ruban inférieur » et « ruban supérieur ».

Avantageusement, le segment de fil RFID n'est pas solidaire des deux rubans entre lesquels il est inséré, il est simplement retenu entre ces deux rubans scellés l'un à l'autre, par exemple le long de leurs côtés. Cette configuration est particulièrement avantageuse, car elle permet d'associer solidairement une telle étiquette à une pièce textile, par exemple par l'intermédiaire d'une couture droite ou de points de surjet. Les contraintes subies par la pièce textile (par exemple en tension) sont transmises aux portions de rubans entre lesquelles le segment de fil RFID est retenu, sans toutefois être transmises à ce fil RFID lui-même, ce qui pourrait l'endommager, par exemple en désolidarisant la puce d'identification de l'antenne. Le dispositif électronique d'identification est donc apte à glisser entre les deux rubans auxquels il n'est pas retenu.

Les deux rubans (lorsque l'étiquette est destiné à intégrer une pièce textile, qui est l'application prise en exemple dans la présente description détaillée) sont typiquement constitués de fibres textiles constituées d'une matière fusible à une température modérée, par exemple inférieure à 400°C, et généralement comprise entre 100°C et 400°C. Une telle matière fusible peut correspondre à une matière thermoplastique usuellement employée dans le domaine de la confection (telle que du polyamide dont la température de fusion est d'environ 180 à 260°C ou du polyester dont la température de fusion est d'environ 260°C). Elle peut correspondre également à une matière plastique. Ces rubans peuvent présenter de légers bourrelets sur leurs bords latéraux, ces bourrelets pouvant avantageusement être exploités pour guider le positionnement des rubans comme cela sera exposé dans une section ultérieure de cette description.

Un fil RFID, selon la présente description, désigne un fil textile portant une pluralité de puces électroniques d'identification et d'antennes réparties dans la longueur du fil. On pourra se référer au document cité en introduction pour obtenir différents modes d'obtention d'un tel fil. Les puces incorporées dans le fils RFID forment de légères protubérances, ce qui permet de repérer ces puces dans la longueur du fil. Cette caractéristique pourra être mise à profit dans un équipement conforme à l'invention comme cela sera exposé ultérieurement.

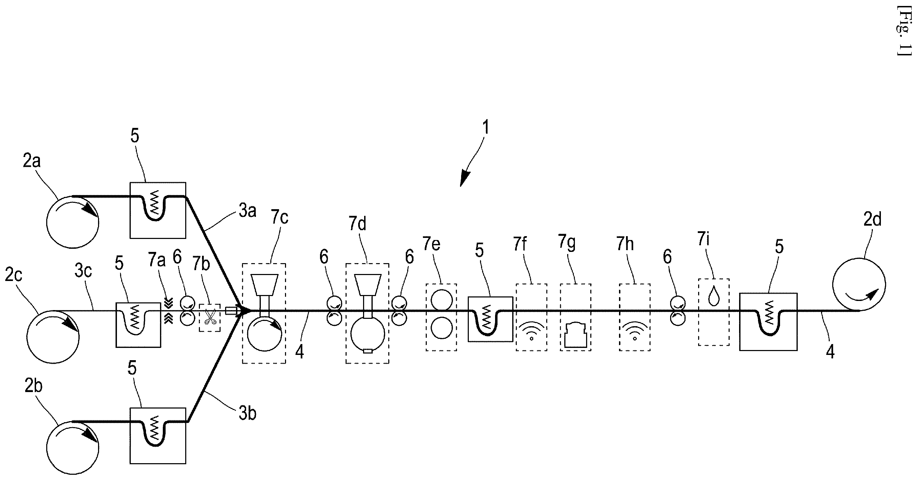

La [Fig.1] représente une vue d'ensemble d'un équipement 1 de fabrication d'une bande d'étiquettes électroniques conforme à l'invention.

Comme cela est visible sur cette vue d'ensemble, l'équipement 1 comprend une première bobine 2a et une seconde bobine 2b contenant respectivement le ruban supérieur 3a et le ruban inférieur 3b. L'équipement comprend également une troisième bobine 2c contentant le fil RFID 3c. Les rubans inférieur 3a, supérieur 3b et le fils RFID se dévident chacun de leur bobine 2a, 2b, 2c et progressent selon une direction générale de défilement dans l'équipement 1 pour être traités par une succession de postes 7a-7i réalisant une variété de traitements conduisant à former une bande d'étiquettes électroniques 4. Cette bande est recueillie sur une bobine d'étiquette 2d en vue de son stockage et de son utilisation future.

Les rubans inférieur 3a, supérieur 3b et la bande d'étiquettes 4 progressent dans l'équipement 1, de poste en poste, de manière continue. Le fil RFID 3c progresse quant à lui, jusqu'à son intégration en sandwich par segments entre les deux rubans 3a,3b, de manière discontinue. Le déroulement de la bobine 2c est en effet interrompu lors de l'opération de découpe visant à prélever un segment, avant son insertion entre le ruban inférieur 3a et le ruban supérieur 3b.

Pour permettre le déroulement des bobines et le défilement des rubans 3a, 3b, de la bande 4 et du fil RFID 3c, l'équipement est muni d'une pluralité de dispositifs d'entrainement et de guidage 6, par exemple composés de galets entrainés en rotation, disposés le long de l'équipement 1, entre les différents postes 7a-7i qui le compose.

L'équipement 1 est notamment muni d'un dispositif d'entrainement et de guidage 6 disposée entre la troisième bobine 2c contentant le fil RFID 3c et le poste de découpe 7b. Ce dispositif d'entrainement 6 permet notamment de « pousser » l'extrémité libre du fil RFID après que celui-ci ait été coupé, vers le poste suivant de scellement 7c, comme cela sera exposé plus en détail dans une section suivante.

L'équipement 1 est également muni d'une pluralité de dispositifs de mise en tension 5 des rubans 3a, 3b, du fil RFID 3c et de la bande d'étiquette 4. D'une manière générale, la tension des rubans 3a,3b, du fil RFID 3c et/ou de la bande d'étiquettes électroniques 4 doit être maitrisée, typiquement entre 0,2 N et 5N, afin de maitriser l'élongation de la matière textile et repérer avec précision le déplacement du ruban dans l'équipement 1. On veillera notamment à appliquer des tensions les plus identiques possibles sur les rubans 3a,3b dans des zones d'assemblage et de scellement de l'équipement 1 qui seront présentées dans une section ultérieure de cette demande.

Ainsi, et avantageusement, les dispositifs d'entrainement et de guidage 6 et les dispositifs de mise en tension 5 sont disposés en amont et/ou en aval de certains postes et sont configurés pour maitriser la tension des rubans 3a,3b, du fil RFID 3c et/ou de la bande d'étiquettes électroniques 4 dans le poste en question. On préférera ainsi d'appliquer une tension relativement élevée aux éléments lors des opérations de scellement ou de cautérisation, et d'appliquer une tension relativement basse à la suite de l'opération de prédécoupe, et lors des opérations de tests.

Bien que les différents postes formant l'équipement 1 représentés sur la [Fig.1] soient tous alignés selon une unique direction générale de défilement, cela ne forme nullement une caractéristique essentielle de l'invention. D'une manière plus générale, les postes de l'équipement 1 peuvent être disposés librement dans l'espace, et l'équipement 1 est muni de suffisamment de dispositifs d'entrainement et de guidage 6 et de dispositif de mise en tension 5 pour entrainer et guider les rubans 3a, 3b, le fil RFID 3c et de la bande d'étiquette 4 entre ces différents postes selon toute configuration qui convient.

Sur le mode de mise en œuvre représenté sur la [Fig.1], l'équipement 1 comprend, successivement depuis les bobines de déroulement 2a,2b,2c à la bobine d'étiquette 2d, une pluralité de postes dont on fait la description dans les sections suivantes. Chacun des postes 7a-7i, outre les dispositifs explicitement décrits permettant de mettre en œuvre les opérations propres au poste en question, est muni d'une unité de commande (comprenant un microcontrôleur, un CPU ou tout autre forme de moyens de calcul, de la mémoire, des ports d'entrée-sortie...), cette unité de commande permettant d'opérer les opérations décrites de manière coordonnées au défilement. A cet effet, les unités de commande des différents postes peuvent communiquer entre eux, avec les dispositifs d'entrainement et de guidage 6, les dispositifs de mise en tension 5, directement ou par l'intermédiaire d'une unité de supervision de l'équipement 1.

### • Poste(s) de repérage 7a.

Un premier poste de repérage 7a est disposé en vis-à-vis du fil RFID 3c. Il permet de repérer, dans le fil RFID 3c qui se déroule de sa bobine 2c, la position d'un dispositif électronique d'identification. Il peut par exemple s'agir d'une came positionnée contre le fil RFID 3c qui défile, cette came étant déplacée lors du passage d'une protubérance du fils RFID 3c (cette protubérance correspondant à une puce d'identification comme cela a été exposé précédemment). La came est associée à un contacteur, et son déplacement permet de déclencher ce contacteur provoquant la génération d'un signal repérant dans le temps l'instant de passage d'une puce. Cet instant de passage peut être communiqué au poste suivant de découpe 7b, qui peut exploiter cette information pour précisément découper le fil RFID 3c et former un segment fonctionnel, c'est-à-dire comprenant un dispositif électronique d'identification comprenant une puce et son antenne.

On note qu'un équipement conforme à la présente description peut comporter d'autres postes de repérage, permettant d'identifier et localiser des éléments remarquables sur l'un des rubans 3a, 3b, sur le fil RFID 3c et/ou sur la bande d'étiquette 4 au cours de leurs défilement. Cette localisation permet la synchronisation des postes 7a-7i et leur bonne opération. Il peut ainsi s'agir de repérer une puce d'identification, comme cela vient d'être illustré en référence au premier poste de repérage, l'antenne, une zone morte de l'étiquette, une zone cautérisée de l'étiquette (tels que ces termes seront définis ultérieurement). Ces postes de repérage peuvent mettre en œuvre une variété de techniques, par exemple, une détection mécanique, une mesure capacitive pour repérer l'antenne et/ou une mesure optique (caméra ou simple photodiode opérée en transmission) pour détecter une zone morte ou une zone cautérisée.

### • Poste de découpe 7b

Ce poste 7b est également disposé en vis-à-vis du fil RFID 3c. Il comprend par exemple une lame ou une pluralité de lames (ou toute autre forme de moyens de coupe), qui peuvent être activées à un instant de découpe déterminé pour détacher un segment de fil RFID du fil RFID 3c. Le poste est relié au poste de repérage 7a, comme cela vient d'être exposé, et reçoit l'instant de passage de la puce au niveau de ce poste 7a. L'instant de découpe peut être aisément déterminé à partir de l'instant de passage, de la distance séparant les deux postes, de la vitesse d'avancement du fils RFID 3c, et de la longueur du segment de fil RFID. Pour permettre cette découpe, et comme on l'a déjà annoncé, le défilement du fil RFID 3c est préférentiellement arrêté brièvement, peu avant l'instant de découpe, le temps d'actionner les moyens de coupes.

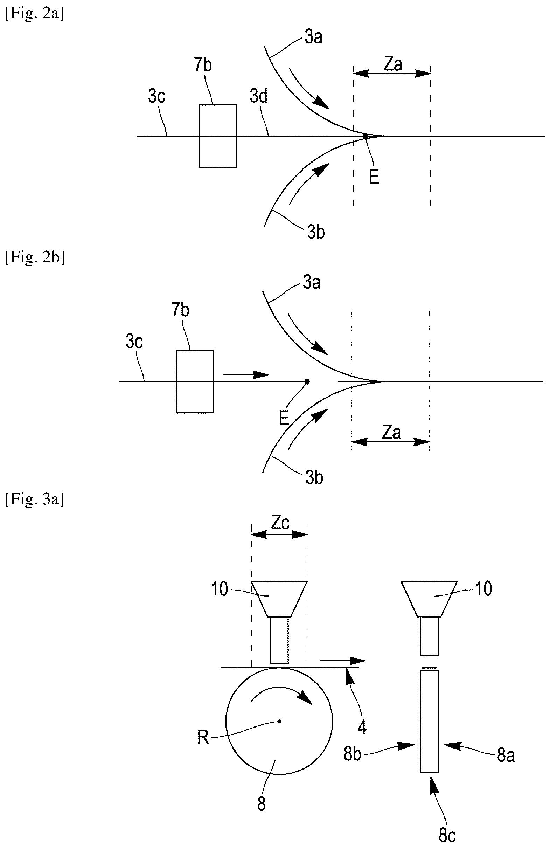

Avantageusement, à cet instant de découpe représenté schématiquement sur la [Fig.2a], l'extrémité libre E du fil RFID 3c est déjà engagée « en sandwich » entre le ruban inférieur 3b et le ruban supérieur 3a défilant au niveau d'une zone dite « d'assemblage » Za du poste suivant de scellement 7c. Pendant la brève période séparant l'arrêt du défilement du fil RFID 3c et l'instant de découpe, l'extrémité libre E du fil RFID 3c engagée en sandwich entre les rubans 3a, 3b ne peut être entrainée par ces rubans. La tension provoquée dans le fil RFID à cet instant qui précède l'activation des moyens de coupe, permet de faciliter et rendre précis la coupe du fil RFID 3c.

Immédiatement après l'instant de découpe, le segment 3d de fil RFID étant libéré du reste du fil RFID 3c, celui-ci est happé par le défilement continu des rubans 3a, 3b pour s'y insérer entièrement, pris en sandwich. Après l'instant de découpe également, le défilement du fil RFID 3c est repris. Le temps d'attente séparant l'instant de découpe de l'instant de reprise du défilement, est choisi pour introduire dans le ruban d'étiquette 4, une zone morte, c'est-à-dire une zone de la bande dépourvue de fil RFID. L'extrémité libre E de ce fil 3c progresse donc en direction de la zone d'assemblage Za du poste suivant de scellement 7c, pour s'engager en sandwich entre le ruban inférieur 3b et le ruban supérieur 3a, comme cela est illustré schématiquement sur la [Fig.2b].

Pour permettre la progression de l'extrémité libre E du fil RFID 3c et l'engager entre le ruban inférieur et le ruban supérieur, on peut prévoir de placer un dispositif d'entrainement et de guidage 6 directement après la lame de découpe, entre le poste de découpe 7b et le poste suivant de scellement. Cela permet notamment de transporter le segment de fil RFID 3d à la zone d'assemblage si celui-ci est plus petit que la distance séparant la position de découpe de la zone d'assemblage, ce qui ne permet pas de positionner son extrémité libre E en sandwich dans la zone d'assemblage Za à l'instant de découpe. Dans cette configuration, le dispositif d'entrainement et de guidage 6 assure la mise en tension du fil RFID 3c avant sa coupe.

Si le fil RFID 3c est suffisamment rigide et la distance séparant la position de découpe de la zone d'assemblage Za adaptée, un tel dispositif d'entrainement n'est pas nécessaire, et l'extrémité libre du fil RFID est poussé vers le poste suivant de scellement sans nécessiter d'être guidé et/ou entrainé. On peut prévoir de disposer un poste d'enduction, avant le poste de découpe 7b en vis-à-vis du fil RFID 3c, permettant de déverser une matière (par exemple une résine) sur le fil RFID 3c le rendant suffisamment rigide pour permettre ce mode de fonctionnement.

On peut également prévoir un mécanisme permettant de sectionner une portion du fil RFID 3c et l'évacuer hors de l'équipement 1, c'est-à-dire éviter que cette portion de fil ne soit transportée vers le poste suivant de scellement 7c. Un tel mécanisme peut être utile si la distance séparant deux puces d'identification portées par le fil RFID 3c est plus grande que la longueur souhaitée de l'étiquette. On souhaite dans ce cas, sectionner une portion du fil RFID 3c pour ramener la longueur d'un dispositif électronique d'identification, et donc d'un segment prélevé du fil RFID 3c, à celle d'une étiquette. Ce mécanisme peut également être utile pour évacuer un segment du fil RFID 3c qui aurait été identifié dysfonctionnel et éviter son intégration dans une étiquette de la bande 4.

Pour permettre cela, on peut prévoir de placer un conduit mobile entre les moyens de coupe du poste de découpe 7b et la zone d'assemblage Za. Pour évacuer une portion de fil, on introduit cette portion dans le conduit mobile, que l'on oriente ou déplace pour éviter son transport vers la zone d'assemblage Za du poste suivant de scellement 7c. Une fois cette portion de fils découpée, des galets d'évacuation disposés en sortie du conduit mobile ou un jet d'air dans le conduit mobile, ou tout autre moyen d'évacuation (des vibrations, par exemple) permettent d'évacuer la portion de fil RFID 3d découpée.

### • Poste 7c de scellement

Comme on l'a compris, ce poste succède directement au poste de découpe 7b. Il vise d'une part à positionner précisément le segment de fil RFID en sandwich, dans la zone d'assemblage Za, entre les deux rubans 3a,3b et à sceller les deux rubans entre eux de manière à rendre prisonnier le segment de fil RFID 3d de ces deux rubans 3a, 3b. En sortie de ce poste 7c de scellement, une bande d'étiquettes 4 est entrainées vers les postes suivant de l'équipement 1.

Dans un poste de scellement 7c conforme à l'invention, le scellement est obtenu par soudure. A cet effet, le poste de scellement 7c comprend une sonotrode présentant une surface active disposée en vis-à-vis d'une face principale d'une enclume. La surface active est positionnée à une distance maitrisée de la surface principale au niveau d'une zone de scellement à travers laquelle les deux rubans préalablement assemblés peuvent défiler et être soudés l'un à l'autre. Comme cela est bien connu en soi, la sonotrode est formée d'une pièce métallique soumise à des ultrasons. La pression de maintien de la sonotrode et l'énergie vibratoire restituée aux rubans défilant entre la sonotrode et l'enclume, permet de les fondre localement et ainsi les sceller par soudure.

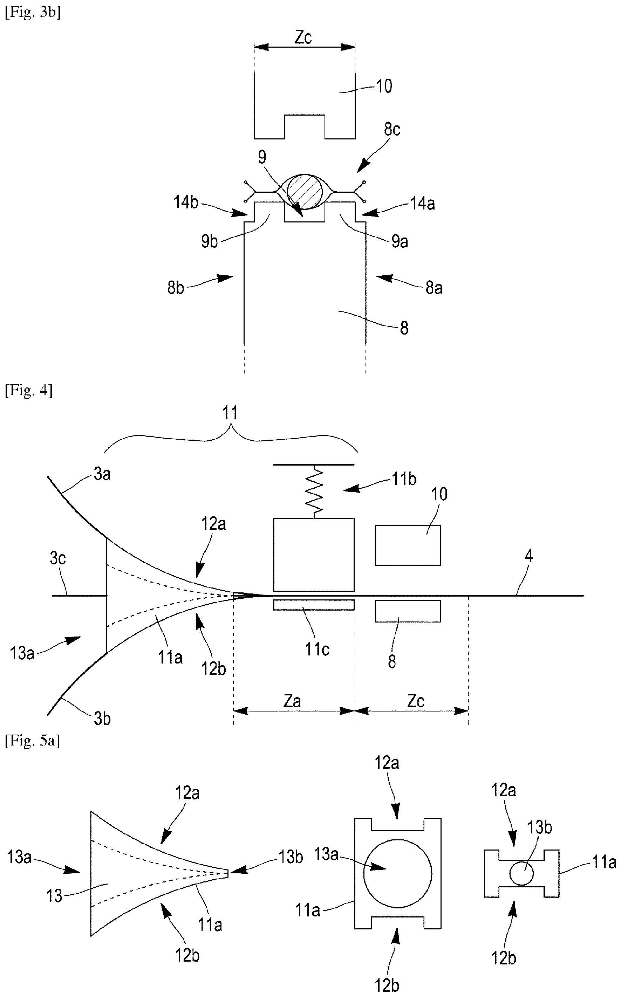

Dans un mode de réalisation préféré, représenté sur les figures 3a et 3b, l'enclume est formée d'un tambour rotatif 8 présentant un axe de rotation R perpendiculaire à la direction de défilement. La rotation du tambour 8 contribue à l'entrainement des rubans (notamment du ruban inférieur 3b, avant l'opération de scellement) et de la bande d'étiquettes 4 (après l'opération de scellement, les deux rubans étant alors scellés l'un à l'autre). Le tambour 8 présente une face périphérique disposée entre deux flancs 8a,8b. La face périphérique 8c présente une largeur correspondant à la largeur des rubans 3a,3b. Elle porte deux rangées latérales de dents de marquage 9a,9b définissant une gorge centrale 9c. Les dents de marquages 9a,9b forment la surface principale de l'enclume. La surface active de la sonotrode 10 présente également deux dents placées, au niveau de la zone de scellement, en vis-à-vis des rangées de dents portées par le tambour. Cette configuration permet de réaliser des points de scellement de part et d'autre de la bande d'étiquette 4, dans sa longueur.

La gorge centrale 9c du tambour 8 et l'écartement des deux rangées de dents de la sonotrode 10 constituent un passage permettant d'accueillir les portions centrales des rubans assemblés l'un à l'autre, déformées par le segment de fil RFID qui y est pris en sandwich, comme cela est bien visible sur la [Fig.3b]. La présence de ce passage est très avantageuse, en ce qu'elle permet le libre défilement des protubérances crées par les puces des segments de fil RFID dans le ruban d'étiquettes, c'est-à-dire sans risque que ces protubérances ne bloquent ou freinent le défilement du ruban d'étiquette. Elle permet également de déformer de manière parfaitement symétrique le ruban inférieur et le ruban supérieur autour du segment de fil RFID, et donc de parfaitement aligner ces deux rubans longitudinalement.

De manière préférée également, les rangées de dents ne sont pas affleurantes au flanc du tambours 8a,8b, mais sont disposées en retrait de ces flancs, vers l'intérieur de la face périphérique 8c, de manière à libérer deux espacements latéraux 14a,14b permettant de placer les bourrelets latéraux du ruban supérieur 3a et du ruban inférieur 3b. Cette configuration contribue à disposer très précisément les deux rubans en vis-à-vis l'un de l'autre pendant l'opération de scellement, et à guider leur progression dans le poste.

La précision du scellement des deux rubans 3a,3b pour retenir prisonnier le segment de fils RFID 3d dépend bien entendu du bon assemblage préalable des deux rubans et, pris en sandwich, du segment de fil RFID. A cet effet, le poste de scellement 7c comprend un dispositif de guidage 11 disposé en amont de la zone de scellement Zc, entre le poste de découpe 7b et cette zone de scellement Zc. Les principes mis en œuvre par le dispositif de guidage 11 sont représentés sur la [Fig.4].

D'une manière très générale, ce dispositif de guidage 11 comprend une pièce 11a, dont différentes vues sont représentées sur la [Fig.5a], présentant un couloir supérieur 12a et un couloir inférieur 12b pour respectivement guider le défilement du ruban supérieur 3a et du ruban inférieur 3b en provenance de leurs bobines respectives 2a,2b. Ces deux couloirs 12a,12b sont convergents afin de réunir les deux rubans 3a,3b, par leurs faces principales, au niveau de la zone d'assemblage Za disposée juste en amont de la zone de scellement Zc. Le dispositif de guidage 11 peut présenter, au niveau de la zone d'assemblage, un support 11c pour recevoir les deux rubans 3a,3b réunis et guider leur défilement.

La pièce 11a du dispositif de guidage 11 comprend également un conduit central 13 disposé entre le couloir supérieur 12a et le couloir inférieur 12b. Ce conduit central 13 s'étend d'une première extrémité 13a disposée du côté du poste de découpe 7b à une seconde extrémité 13b débouchant au niveau de la zone d'assemblage Za. Les deux extrémités sont disposées sur deux faces opposée de la pièce 11a, dans la configuration de la [Fig.5a]. En fonctionnement, l'extrémité libre E du fil RFID 3c en provenance du poste de découpe 7b est introduit par la première extrémité 13a du conduit central 13, progresse dans ce conduit 13, pour déboucher au niveau de la zone d'assemblage Za où elle est prise en sandwich entre le ruban inférieur 3b et le ruban supérieur 3a qui défilent de leurs couloirs respectifs 12b,12a. Comme on l'a vu précédemment, le poste de découpe 7b est synchronisé avec le poste de scellement 7c, de sorte que le fil RFID 3c est découpé pour former le segment de fil RFID 3d avantageusement lorsque l'extrémité libre E du fil RFID 3c est engagée au niveau de la zone d'assemblage Za, en sandwich entre les deux rubans défilants 3a,3b. Cette configuration facilite la découpe du fil qui est placé en tension, permet d'entrainer le segment de fil RFID, happé par le défilement des deux rubans, à l'instant de sa découpe. Le segment de fil RFID 3d est transporté, progressivement pris en sandwich entre les deux rubans 3a,3b, pour amener l'ensemble au niveau de la zone de scellement Zc dans laquelle les deux rubans sont scellés l'un à l'autre.

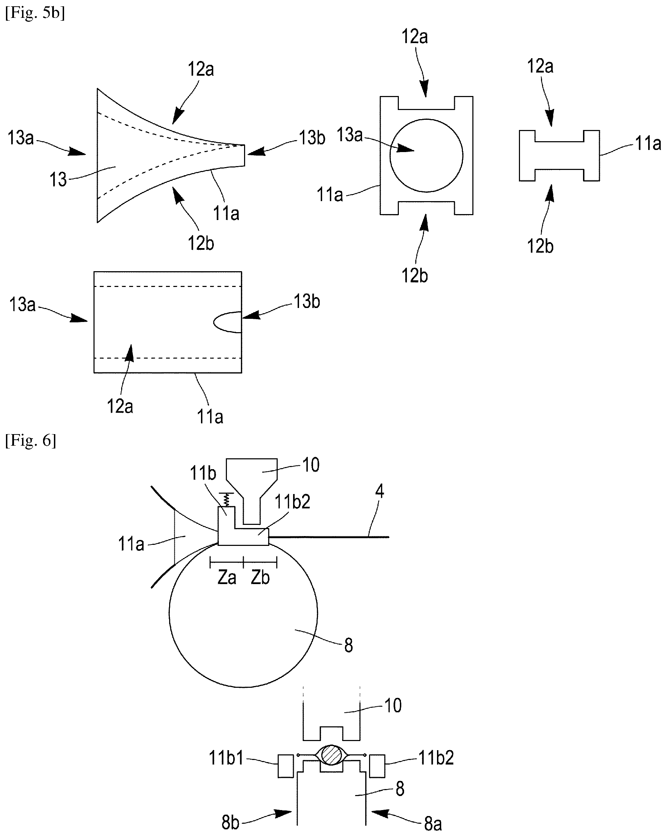

La [Fig.5b] représente différentes vues d'une pièce 11a du dispositif de guidage 11 dans une configuration alternative. Dans cette configuration, la seconde extrémité 13b du conduit central 13, débouche dans le couloir supérieur 12a. L'intersection du plan définissant le fond du couloir avec l'extrémité 13b du conduit, forme une ouverture en portion d'ellipse, bien visible sur la vue de dessus de la pièce 11a représentée sur la [Fig.5b]. Cette configuration favorise la mise en contact progressive du ruban supérieur 3a avec le segment de fil RFID qui émerge de cette ouverture. Cette configuration permet notamment de bien retenir le segment de fil RFID latéralement centrés entre les deux rubans, afin de faciliter son positionnent vis-à-vis d'une rainure d'une surface d'appui d'un pied presseur, tel que cela sera présenté ultérieurement.

Comme on l'a déjà brièvement indiqué, le bref instant pendant lequel le défilement du fil RFID 3c est interrompu, pour assurer sa découpe, permet d'introduire dans la bande d'étiquette 4 produite par le poste de scellement, des zones « mortes » de la bande dans lesquelles aucune portion de fil RFID n'est présent. Ces zones mortes dépourvues de fil RFID, régulièrement réparties sur la bande d'étiquettes, permettent de séparer deux étiquettes successives de la bande 4. Elle forme des zones dans lesquelles on pourra sceller les deux rubans l'un à l'autre, transversalement, sans risque d'endommager le dispositif électronique d'identification. Elle forme également des zones permettant de positionner des prédécoupes d'étiquette, afin de pouvoir séparer aisément, par exemple par arrachement, une étiquette de la bande 4.

Le mécanisme d'entrainement et la faculté pour les rubans défilant de « happer » le segment de fil RFID, nécessitent que le ruban supérieur 3a et le ruban inférieur 3b appliquent une pression suffisante sur l'extrémité libre E du fil RFID, notamment à l'instant de découpe. Cette pression doit cependant être maitrisée pour ne pas mettre les rubans 3a,3b dans un état de tension excessif. A cet effet, le dispositif de guidage 11 du poste de scellement 7c comprend un pied presseur 11b disposé au droit de l'assemblage des rubans dans la zone d'assemblage Za, en vis-à-vis du support plan. Le pied presseur présente une surface d'appui destiné à appliquer une pression maitrisée sur l'assemblage formé au moins du ruban supérieur 3a et du ruban inférieur 3b. Le pied presseur est une pièce mobile, dont la surface d'appui est appliquée avec une pression maitrisée contre l'un des deux rubans au niveau de la zone d'assemblage Za, afin de plaquer les deux rubans l'un contre l'autre et permettre l'entrainement du segment de fil RFID. La maitrise de la pression appliquée par le pied presseur 11b à l'assemblage peut être obtenu par l'intermédiaire d'un moyen de pression calibré, par exemple un ressort, un vérin, ou une lame flexible. Le pied presseur doit notamment être apte à se relever au passage d'une protubérance dans un segment de fil RFID correspondant à une puce d'identification intégrée dans ce segment de fil.

La surface d'appui du pied presseur 11b permet également de plaquer, avec une pression maitrisée, l'assemblage formé des deux rubans contre le tambour rotatif, lorsqu'une telle configuration du poste de scellement est choisie. On favorise alors l'adhérence des rubans 3a,3b contre ce tambour et leur transport vers la zone de scellement.

La [Fig.6] représente une telle configuration. On retrouve un dispositif de guidage comprenant une pièce 11a permettant de guider les rubans 3a,3b et le fil RFID 3c jusqu'à la zone d'assemblage Za. Le pied presseur 11b est ici monté en cavalier sur le tambour 8 formant l'enclume du poste de scellement. Cette pièce 11b présente deux bras longitudinaux 11b1, 11b2 disposé parallèlement aux flancs 8a,8b du tambour, au niveau des deux espacements latéraux 14a,14b. Ces bras contribuent à guider le défilement et le positionnement des rubans 3a,3c dans la zone de scellement.

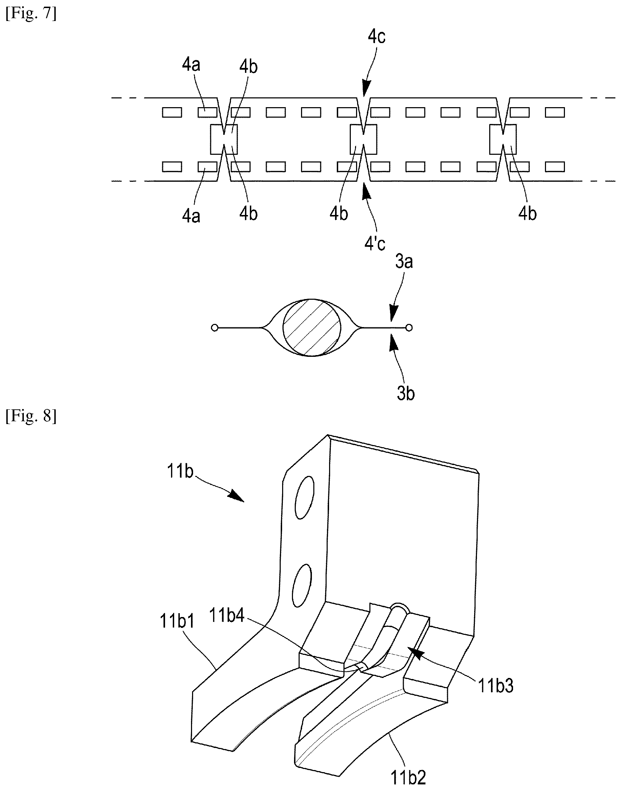

La [Fig.8] représente une vue en perspective du pied presseur 11b. On retrouve bien sur cette représentation, les deux bras longitudinaux 11b1, 11b2 destinée à être placé de part et d'autre du tambour 8. Entre ces deux bras, on observe la surface d'appui 11b3 permettant d'appliquer la pression maitrisée dans la zone d'assemblage. Cette surface d'appui est pourvue d'une rainure, dimensionnée à la forme du segment du fil afin de permettre le bon positionnement de l'assemblage formé du ruban supérieur 3a, du segment de fil, et du ruban inférieur 3b.

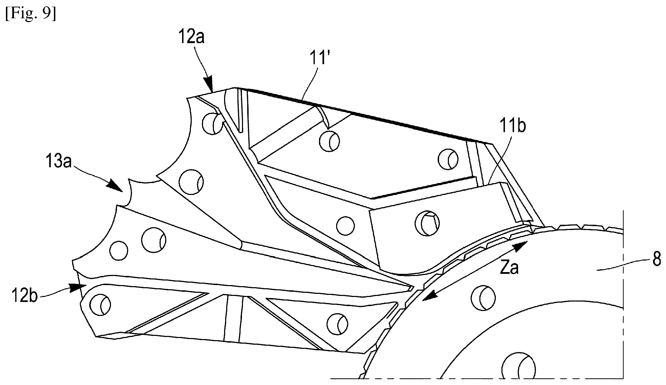

Dans une variante de réalisation du dispositif de guidage 11, celui-ci peut se présenter sous la forme d'un corps dans lequel sont aménagés deux tunnels, formant respectivement le couloir supérieur 12a et le couloir inférieur 12b, les tunnels se rejoignant au niveau d'un logement interne du corps, ce logement définissant la zone d'assemblage Za. Le corps peut être formé de deux coques complémentaires, l'une de ces coques 11' étant représentée sur la [Fig.9], afin de rendre apparent les tunnels et les autres éléments constituant ce dispositif de guidage. Le corps présente également un conduit central 13a disposé entre les deux tunnels 12a,12b, le conduit central 13a s'étendant d'une première extrémité à une seconde extrémité débouchant au niveau de la zone d'assemblage Za, dans le logement interne. Le pied presseur 11b est disposé dans le logement interne, avec le moyen de pression lui permettant d'appliquer une pression maitrisée sur l'assemblage formé des deux rubans. La pièce de guidage peut être disposée de sorte que le tambour 8 soit inséré dans le logement interne, comme cela est visible sur la [Fig.9]. La face principale du tambour forme alors le support contre lequel le pied presseur 11b prend appui pour appliquer une pression maitrisée sur l'assemblage formé du ruban supérieur 3a, du segment de fil, et du ruban inférieur 3b.

### • Poste de cautérisation 7d.

Le poste de cautérisation 7d précède le poste de prédécoupe 7e. Il reçoit la bande d'étiquettes, entrainée dans l'équipement 1 en direction de la bobine 2d. Le traitement opéré par ce poste vise d'une part à sceller les deux rubans 3a, 3b l'un à l'autre, transversalement. Comme on l'a vu, ce scellement se réalise de préférence dans chacune des zones mortes de la bande d'étiquette, afin d'éviter d'endommager le dispositif électronique d'identification. Ce scellement peut être réalisé par soudure, tout comme le scellement latéral réalisé sur le poste de scellement. Ce poste peut donc comprendre une enclume et une sonotrode disposés en vis à vis l'une de l'autre et entre lesquels défile la bande d'étiquette 4. La surface active de la sonotrode peut être disposée au droit d'une portion centrale de la bande et s'étendre latéralement sur une largeur plus étroite que la bande. On forme ainsi un pavé de soudure dans la zone morte permettant de refermer cette portion centrale entre deux étiquettes successives.

Au niveau du pavé de soudure disposé dans la portion centrale de la bande, les fibres textiles constituant les rubans sont fondues entre elles. De part et d'autre de ce pavé central, les fibres textiles sont restées intègres. Tout comme dans le poste 7c de scellement, l'enclume peut se présenter sous la forme d'un tambour, permettant d'entrainer en rotation la bande d'étiquettes 4.

### • Poste de prédécoupe 7e

Ce poste succède, directement ou indirectement, au poste de cautérisation 7d. Un couteau, par exemple formé sur un galet rotatif, permet de former deux entailles transversales dans la bande d'étiquette au cours de son défilement sur ce poste, au niveau des zones mortes. Ces entailles transversales visent à couper au moins les parties du ruban qui n'ont pas été fondues par le pavé de soudure disposé dans une portion centrale de la bande, au cours de l'étape précédente de cautérisation. A l'issue de cette étape, deux étiquettes successives de la bande d'étiquettes 4 sont donc solidaires entre elles par l'intermédiaire d'une fine largeur de matériau fondu. Cette fine largeur peut être facilement arrachée de la bande, afin d'y prélever une étiquette. A cet effet, la fine largeur de matériau fondu est dimensionnée précisément afin de permettre l'arrachement d'une étiquette à l'aide d'une force calibrée. Le caractère amorphe et fondu de cette fine largeur évite de tirer un fil textile du ruban lors de cette étape d'arrachement, et ainsi de détacher nettement une étiquette de la bande d'étiquette 4.

La [Fig.7] représente une portion de bande d'étiquette 4 obtenue après les postes de cautérisation et de prédécoupe. On retrouve les points de soudures 4a courant latéralement sur les côtés de la bande, ces points ayant été formés lors du passage dans le poste de scellement. On retrouve également les pavés de soudures 4b disposés dans les zones mortes, dans une portion centrale de la bande. On retrouve enfin les entailles transversales 4c, 4c'visant à couper les parties du ruban qui n'ont pas été fondues par le pavé de soudure disposé dans une portion centrale de la bande. On observe que deux étiquettes successives sont bien solidaires entre elles par l'intermédiaire d'une fine largeur de matériau fondu.

### • Poste de contrôle RF 7f

Ce poste permet de vérifier le bon fonctionnement du dispositif électronique d'identification de chaque étiquette. On vérifie notamment si ce dispositif est apte à recevoir et à émettre un signal radiofréquence d'identification. Les étiquettes non fonctionnelles peuvent être repérés en vue de leur marquage.

### • Poste de contrôle-vision 7g

Ce poste permet de procéder à l'acquisition d'images successives de la bande d'étiquette 4. Ces images peuvent être analysées, visuellement ou par inspection automatique, pour y repérer des défauts de fabrication. Il peut par exemple s'agir de repérer des points ou des pavés de soudure imparfaits, ou des entailles de prédécoupe manquantes ou insuffisantes. Les étiquettes présentant des défauts de fabrication peuvent être repérées en vue de leur marquage.

### • Poste d'encodage RF 7h

Ce poste permet d'encoder le dispositif électronique d'identification en lui attribuant un numéro d'identification unique. Ce poste permet également de repérer les dispositifs électroniques défaillant à l'encodage.

### • Poste de marquages des étiquettes dysfonctionnelles ou présentant des défauts.

Ce poste permet de marquer visuellement, par exemple en y appliquant une couche de couleur, les étiquettes non fonctionnelles ou présentant des défauts qui auraient été repérés dans l'un des postes précédents de contrôle RF 7f, d'encodage RF 7h ou de contrôle vision 7g. Le poste peut comprendre une buse de dispense, relié à un réservoir d'encre, l'ensemble permettant de projeter la marque visuelle sur le ruban d'étiquettes 4, et plus précisément sur les étiquettes pré-repérés qui défilent. L'utilisateur final pourra ainsi facilement discriminer les étiquettes fonctionnelles de celles qui ne le sont pas, sans nécessairement répéter les tests déjà réalisés sur l'équipement 1.

On comprend bien entendu que tous ces postes ne sont pas nécessairement présents dans un équipement 1 conforme à l'invention ou qu'ils peuvent être ordonnés dans un ordre différent de celui représenté, selon tout ordre qui est techniquement cohérent.

Bien entendu l'invention n'est pas limitée aux modes de mise en œuvre décrits et on peut y apporter des variantes de réalisation sans sortir du cadre de l'invention tel que défini par les revendications.

En particulier, dans le mode de mis en œuvre décrit, le ruban supérieur 3a et le ruban inférieur 3b sont deux rubans indépendants qui se dévident de deux bobines distinctes. On peut tout à fait envisager, sans sortir du cadre de l'invention, que les rubans supérieur 3a et inférieur 3b soient issus d'un unique ruban de grande largeur, replié sur lui-même longitudinalement, pour former les deux rubans 3a,3b jointifs. Le repliement du ruban de grande largeur peut être réalisé par un poste de repliement dédié de l'équipement 1, disposé en amont du poste de scellement. Alternativement, cette étape de repliement peut être opérée dans une section amont du dispositif de guidage 11. La configuration des deux couloirs de ce dispositif 11 est alors ajustée pour permettre le guidage des rubans inférieur et supérieur jointifs sur un de leur côté. L'étape de scellement peut dans ce cas consister à former une unique ligne de points de soudure le long de la zone de rabattement du ruban de grande dimension.

La nature des rubans inférieur et supérieur peut être choisie selon le domaine d'application visée par l'étiquette électronique, et notamment par la nature de la pièce dans laquelle cette étiquette est destinée à être intégrée. Ainsi, les rubans peuvent être de nature textile lorsque l'étiquette est destinée à être intégrée à une pièce textile, conformément à l'exemple pris en illustration dans la présente description détaillée. Toutefois les rubans peuvent être choisis d'une tout autre nature, notamment à base d'au moins un polymère. Par exemple, lorsque l'étiquette est destinée à être intégrée dans un pneumatique ou tout autre produit à base de caoutchouc, les rubans peuvent être constitués d'une matière élastomère, de préférence de caoutchouc cru, cuit ou vulcanisé. Il est connu dans ce domaine d'intégrer un dispositif RFID (c-à-d. une puce électronique d'identification présentant des fonctions d'émission-réception radiofréquence couplée à une antenne) entre deux lanières de caoutchouc cru, cet ensemble étant intégré à l'intérieur de la structure d'un pneumatique au cours de sa fabrication, et notamment avant l'étape de cuisson. D'une manière générale le ruban inférieur et le ruban supérieur peuvent donc être choisis en tous matériaux qui conviennent, ces matériaux pouvant être identiques ou distincts.

Par ailleurs, il n'est pas indispensable que la puce électronique du dispositif électronique soit constituée d'une puce électronique d'identification. Il peut s'agir d'une manière plus générale de tout type de puce électronique, par exemple une puce électronique formant un capteur qui peut optionnellement incorporer des fonctions d'émission-réception reliées à l'antenne afin de pouvoir communiquer ces mesures. Il peut alternativement s'agir d'une puce électronique présentant des fonctions de luminescence. De ce point de vue, et d'une manière générale, l'invention concerne donc un équipement de fabrication d'une étiquette électronique comprenant un dispositif électronique intégré dans un ruban.

## Revendications

1. Équipement de fabrication (1) d'une bande d'étiquettes électroniques (4), la fabrication comprenant l'insertion successive de segments de fils, portant chacun un dispositif électronique, entre un ruban inférieur (3b) et un ruban supérieur (3a) qui progressent selon une direction de défilement, l'équipement comprenant un poste de scellement (7c) présentant une zone de scellement (Zc) et comportant :
• un dispositif de guidage (11) disposé en amont de la zone de scellement (Zc) et présentant :
i. un couloir supérieur (12a) et un couloir inférieur (12b) pour respectivement guider le défilement du ruban supérieur (3a) et du ruban inférieur (3b) et les réunir l'un contre l'autre au niveau d'une zone d'assemblage (Za) disposée en amont de la zone de scellement (Zc) ;
ii. un conduit central (13a) disposé entre le couloir supérieur (12a) et le couloir inférieur (12b), le conduit central (13a) s'étendant d'une première extrémité à une seconde extrémité débouchant au niveau de la zone d'assemblage (Za), le conduit central (13a) étant destiné à guider le segment de fil pour le disposer en sandwich entre le ruban supérieur (3a) et le ruban inférieur (3b) ;
• **caractérisé en ce qu'**il comprend un pied presseur (11b) disposé au moins au droit de la zone d'assemblage (Za) pour appliquer une pression maitrisée sur l'assemblage formé du ruban supérieur (3a), du segment de fil, et du ruban inférieur (3b).

2. Équipement de fabrication (1) selon la revendication précédente dans lequel le poste de scellement (7c) comprend une enclume (8) présentant une surface principale et une sonotrode (10) présentant une surface active disposée en vis-à-vis de la surface principale de l'enclume (8) au niveau de la zone de scellement (Zc) à travers laquelle les deux rubans peuvent défiler et être soudés l'un à l'autre.

3. Équipement de fabrication (1) selon l'une des revendications précédentes dans lequel le dispositif de guidage (11) comprend un moyen de pression couplé au pied presseur (11b), pour maitriser la pression appliquée sur l'assemblage formé au moins du ruban supérieur (3a) et du ruban inférieur (3b).

4. Équipement de fabrication (1) selon l'une des revendications 2 à 3 dans lequel l'enclume est formée d'un tambour rotatif (8) présentant un axe de rotation (R) perpendiculaire à la direction de défilement et une face périphérique (8c) portant deux rangées latérales de dents de marquage (9a,9b) définissant une gorge centrale (9c), les dents de marquages formant la surface principale de l'enclume (8).

5. Équipement de fabrication (1) selon la revendication précédente dans lequel le tambour rotatif (8) présente deux flancs circulaires (8a,8b), les rangées de dents de marquage (9a,9b) étant disposées en retrait des flancs circulaires (8a,8b), vers l'intérieur de la face périphérique (8c), de manière à libérer deux espacements latéraux (14a,14b).

6. Équipement de fabrication (1) selon l'une des revendications précédentes dans lequel le pied presseur (11b) comprend deux bras longitudinaux (11b1,11b2).

7. Équipement de fabrication (1) selon la revendication précédente dans lequel le pied presseur (11b) comprend, entre les bras longitudinaux (11b1,11b2), une surface d'appui (11b3) portant une rainure (11b4).

8. Équipement de fabrication (1) selon l'une des deux revendications précédentes lorsqu'elle est combinée avec la revendication 5, dans lequel le pieds presseur est monté en cavalier sur le tambour (8) pour disposer les bras longitudinaux (11b1,11b2) parallèlement aux flancs circulaires du tambour, au niveau des deux espacements latéraux (14a,14b).

9. Équipement de fabrication (1) selon l'une des revendications précédentes dans lequel le dispositif de guidage (11) comprend un corps présentant deux tunnels formant respectivement le couloir supérieur (12a) et le couloir inférieur (12b), les deux tunnels et le conduit central (13a) débouchant dans un logement dans lequel le pied presseur (11b) réside.

10. Équipement de fabrication (1) selon l'une des revendications précédentes dans lequel le poste de scellement (7c) est précédé d'un poste de découpe (7b) d'un fil de grande dimension pour en prélever les segments.

11. Équipement de fabrication (1) selon l'une des revendications précédentes comprenant un poste de cautérisation (7d) pour recevoir la bande d'étiquette (4) et former un pavé de soudure (4b) dans une portion centrale d'une zone morte de la bande (4), dépourvue de segment de fil.

12. Équipement de fabrication (1) selon la revendication précédente comprenant un poste de prédécoupe (7e) pour former deux entailles transversales (4c) dans la zone morte de la bande pour couper au moins les parties latérales du ruban disposée hors de la portion centrale occupée par le pavé de soudure (4b).

13. Équipement de fabrication (1) selon l'une des revendications précédentes comprenant au moins un poste de repérage pour localiser un élément remarquable sur l'un des rubans (3a, 3b), sur le segment de fils et/ou sur la bande d'étiquette (4) au cours de leurs défilements.

14. Équipement de fabrication (1) selon l'une des revendications précédentes comprenant au moins un poste de repliement, disposé en amont du poste de scellement, le poste de repliement recevant un ruban de relativement grande largeur qu'il replie sur-lui même longitudinalement pour former les rubans supérieur (3a) et inférieur (3b).

## Patentansprüche

1. Einrichtung zum Herstellen (1) eines Bandes von elektronischen Etiketten (4), die Herstellung umfassend das aufeinanderfolgende Einfügen von Drahtsegmenten, die jeweils eine elektronische Vorrichtung tragen, zwischen ein unteres Band (3b) und ein oberes Band (3a), die in einer Laufrichtung vorrücken, die Einrichtung umfassend eine Versiegelungsstation (7c), die eine Versiegelungszone (Zc) aufweist und vorweist:
• eine Führungsvorrichtung (11), die stromaufwärts der Versiegelungszone (Zc) eingerichtet ist und aufweist:
i. einen oberen Kanal (12a) und einen unteren Kanal (12b) zum Führen jeweils des Laufs des oberen Bandes (3a) und des unteren Bandes (3b) und Zusammenbringen von ihnen gegeneinander in einer Anordnungszone (Za), die stromaufwärts der Versiegelungszone (Zc) eingerichtet ist;
ii. eine zentrale Rinne (13a), die zwischen dem oberen Kanal (12a) und dem unteren Kanal (12b) eingerichtet ist, wobei sich die zentrale Rinne (13a) von einem ersten Ende zu einem zweiten Ende erstreckt, das in der Anordnungszone (Za) mündet, wobei die zentrale Rinne (13a) dazu bestimmt ist, das Drahtsegment zum sandwichartigen Einrichten davon zwischen dem oberen Band (3a) und dem unteren Band (3b) zu führen;
• **dadurch gekennzeichnet, dass** sie ferner umfasst
ein Drückerfuß (11b), der mindestens in der Anordnungszone (Za) zum Ausüben eines kontrollierten Drucks auf die Anordnung eingerichtet ist, die aus dem oberen Band (3a), dem Drahtsegment und dem unteren Band (3b) ausgebildet ist.

2. Herstellungseinrichtung (1) nach dem vorstehenden Anspruch, wobei die Versiegelungsstation (7c) einen Amboss (8) umfasst, der eine Hauptoberfläche und eine Sonotrode (10) aufweist, die eine aktive Oberfläche aufweist, die gegenüber der Hauptoberfläche des Ambosses (8) in der Versiegelungszone (Zc) eingerichtet ist, durch die die zwei Bänder laufen und miteinander verschweißt werden können.

3. Herstellungseinrichtung (1) nach einem der vorstehenden Ansprüche, wobei die Führungsvorrichtung (11) ein Druckmittel, das mit dem Drückerfuß (11b) gekoppelt ist, zum Kontrollieren des Drucks umfasst, der auf die Anordnung ausgeübt wird, die aus mindestens dem oberen Band (3a) und dem unteren Band (3b) ausgebildet ist.

4. Herstellungsvorrichtung (1) nach einem der Ansprüche 2 bis 3, wobei der Amboss aus einer Drehtrommel (8) ausgebildet ist, die eine Drehachse (R) senkrecht zu der Laufrichtung und eine Umfangsfläche (8c) aufweist, die zwei seitliche Reihen von Markierungszähnen (9a, 9b) trägt, die eine zentrale Nut (9c) definieren, wobei die Markierungszähne die Hauptoberfläche des Ambosses (8) ausbilden.

5. Herstellungseinrichtung (1) nach dem vorstehenden Anspruch, wobei die Drehtrommel (8) zwei kreisförmige Flanken (8a, 8b) aufweist, wobei die Reihen von Markierungszähnen (9a, 9b) gegenüber den kreisförmigen Flanken (8a, 8b) in Richtung des Inneren der Umfangsfläche (8c) hin zurückgesetzt eingerichtet sind, um zwei seitliche Zwischenräume (14a, 14b) freizulassen.

6. Herstellungseinrichtung (1) nach einem der vorstehenden Ansprüche, wobei der Drückerfuß (11b) zwei Längsarme (11b1, 11b2) umfasst.

7. Herstellungseinrichtung (1) nach dem vorstehenden Anspruch, wobei der Drückerfuß (11b) zwischen den Längsarmen (11b1, 11b2) eine Auflageoberfläche (11b3) umfasst, die eine Rille (11b4) trägt.

8. Herstellungseinrichtung (1) nach einem der zwei vorstehenden Ansprüche in Kombination mit Anspruch 5, wobei der Drückerfuß zum Einrichten der Längsarme (11b1, 11b2) parallel zu den kreisförmigen Flanken der Trommel in den zwei seitlichen Zwischenräumen (14a, 14b) rittlings auf der Trommel (8) montiert ist.

9. Herstellungseinrichtung (1) nach einem der vorstehenden Ansprüche, wobei die Führungsvorrichtung (11) einen Körper umfasst, der zwei Tunnel aufweist, die jeweils den oberen Kanal (12a) und den unteren Kanal (12b) ausbilden, wobei die zwei Tunnel und die zentrale Rinne (13a) in einen Sitz münden, in dem sich der Drückerfuß (11b) befindet.

10. Herstellungseinrichtung (1) nach einem der vorstehenden Ansprüche, wobei der Versiegelungsstation (7c) eine Schneidstation (7b) für einen Draht großer Abmessungen zum Entnehmen der Segmente daraus vorgeschaltet ist.

11. Herstellungseinrichtung (1) nach einem der vorstehenden Ansprüche, umfassend eine Kauterisierungsstation (7d) zum Aufnehmen des Etikettenbandes (4) und zum Ausbilden eines Schweißblocks (4b) in einem zentralen Abschnitt einer Totzone des Bandes (4), die ohne ein Drahtsegment ist.

12. Herstellungseinrichtung (1) nach dem vorstehenden Anspruch, umfassend eine Vorschneidestation (7e) zum Ausbilden von zwei Quereinschnitten (4c) in der Totzone des Bandes zum Schneiden mindestens der Seitenteile des Bandes, die außerhalb des zentralen Abschnitts eingerichtet sind, der durch den Schweißblock (4b) eingenommen wird.

13. Herstellungseinrichtung (1) nach einem der vorstehenden Ansprüche, umfassend mindestens eine Ortungsstation zum Lokalisieren eines markanten Elements auf einem der Bänder (3a, 3b), auf dem Drahtsegment und/oder auf dem Etikettenband (4) während ihrer Durchläufe.

14. Herstellungseinrichtung (1) nach einem der vorstehenden Ansprüche, umfassend mindestens eine Faltstation, die stromaufwärts der Versiegelungsstation eingerichtet ist, wobei die Faltstation ein Band von relativ großer Breite, das sie in Längsrichtung auf sich selbst faltet, zum Ausbilden des oberen (3a) und des unteren (3b) Bands aufnimmt.

## Claims

1. An apparatus (1) for manufacturing a strip (4) of electronic tags, the manufacturing process comprising the successive insertion of segments of wire, each bearing an electronic device, between a lower tape (3b) and an upper tape (3a) which progress in a direction of advance, the apparatus comprising a sealing station (7c) having a sealing zone (Zc) and including:
• a guide device (11) arranged upstream of the sealing zone (Zc) and having:
i. an upper channel (12a) and a lower channel (12b) for guiding the upper tape (3a) and the lower tape (3b), respectively, in their advance and bringing them together at an assembly zone (Za) located upstream of the sealing zone (Zc);
ii. a central pipe (13a) arranged between the upper channel (12a) and the lower channel (12b), the central pipe (13a) extending from a first end to a second end opening out at the assembly zone (Za), the central pipe (13a) being intended to guide the segment of wire in order to sandwich it between the upper tape (3a) and the lower tape (3b);
• **characterized in that** it comprises
a presser foot (11b) arranged at least in line with the assembly zone (Za) in order to apply a controlled pressure to the assembly formed of the upper tape (3a), the segment of wire, and the lower tape (3b).

2. The manufacturing apparatus (1) according to the preceding claim, wherein the sealing station (7c) comprises an anvil (8) having a main surface and a sonotrode (10) having an active surface arranged opposite the main surface of the anvil (8) at the sealing zone (Zc) through which the two tapes can advance and be welded together.

3. The manufacturing apparatus (1) according to either of the preceding claims, wherein the guide device (11) comprises a pressure means coupled to the presser foot (11b), in order to control the pressure applied to the assembly formed of at least the upper tape (3a) and the lower tape (3b).

4. The manufacturing apparatus (1) according to either of claims 2 to 3, wherein the anvil is formed of a rotating drum (8) having a rotation axis (R) perpendicular to the direction of advance and a peripheral face (8c) bearing two lateral rows of marking teeth (9a, 9b) defining a central groove (9c), the marking teeth forming the main surface of the anvil (8).

5. The manufacturing apparatus (1) according to the preceding claim, wherein the rotating drum (8) has two circular flanks (8a, 8b), the rows of marking teeth (9a, 9b) being set back from the circular flanks (8a, 8b), toward the inside of the peripheral face (8c), so as to leave two lateral spaces (14a, 14b).

6. The manufacturing apparatus (1) according to any of the preceding claims, wherein the presser foot (11b) comprises two longitudinal arms (11b1, 11b2).

7. The manufacturing apparatus (1) according to the preceding claim, wherein the presser foot (11b) comprises, between the longitudinal arms (11b1, 11b2), a support surface (11b3) bearing a groove (11b4).

8. The manufacturing apparatus (1) according to either of the two preceding claims when combined with claim 5, wherein the presser foot is mounted straddling the drum (8) in order to arrange the longitudinal arms (11b1, 11b2) parallel to the circular flanks of the drum, at the two lateral spaces (14a, 14b).

9. The manufacturing apparatus (1) according to any of the preceding claims, wherein the guide device (11) comprises a body having two tunnels forming the upper channel (12a) and the lower channel (12b), respectively, the two tunnels and the central pipe (13a) opening into a housing in which the presser foot (11b) resides.

10. The manufacturing apparatus (1) according to any of the preceding claims, wherein the sealing station (7c) is preceded by a large-wire cutting station (7b) for collecting the segments therefrom.

11. The manufacturing apparatus (1) according to any of the preceding claims, comprising a cauterizing station (7d) for receiving the tag strip (4) and forming a weld pad (4b) in a central portion of a dead zone of the strip (4), devoid of segments of wire.

12. The manufacturing apparatus (1) according to the preceding claim, comprising a pre-cutting station (7e) for forming two transverse notches (4c) in the dead zone of the strip in order to cut at least the lateral parts of the tape arranged outside the central portion occupied by the weld pad (4b).

13. The manufacturing apparatus (1) according to any of the preceding claims, comprising at least one registering station for locating a remarkable element on one of the tapes (3a, 3b), on the segment of wire, and/or on the tag strip (4) as they advance.

14. The manufacturing apparatus (1) according to any of the preceding claims, comprising at least one folding station, arranged upstream of the sealing station, the folding station receiving a relatively wide tape which it folds onto itself longitudinally in order to form the upper (3a) and the lower tape (3b).
